(19) **Europäisches Patentamt / European Patent Office / Office européen des brevets**

(11) **EP 0 882 491 B1**

(12) **EUROPEAN PATENT SPECIFICATION**

(45) Date of publication and mention
of the grant of the patent:
**03.01.2007 Bulletin 2007/01**

(21) Application number: **97943173.1**

(22) Date of filing: **09.10.1997**

(51) Int Cl.:
***B01D 53/86*** (2006.01)

(86) International application number:
**PCT/JP1997/003641**

(87) International publication number:
**WO 1998/015340 (16.04.1998 Gazette 1998/15)**

(54) **EXHAUST GAS PROCESSING METHOD**

METHODE ZUR ABGASBEHANDLUNG

PROCEDE DE TRAITEMENT DE GAZ D'ECHAPPEMENT

(84) Designated Contracting States:
**DE NL**

(30) Priority: **09.10.1996 JP 26855696**

(43) Date of publication of application:
**09.12.1998 Bulletin 1998/50**

(73) Proprietor: **SUMITOMO HEAVY INDUSTRIES, LTD.
Shinagawa-ku,
Tokyo 141-8686 (JP)**

(72) Inventors:
• **TAKAHASHI, Kazuyoshi
Kanagawa 254 (JP)**
• **YAMADA, Shinichi,
1416-4, Susugaya
Aiko-gun
Kanagawa 243-01 (JP)**

• **GOTOU, Kouhei
Kanagawa 247 (JP)**
• **WATANABE, Teruo
Ibaraki 300-12 (JP)**
• **TANAKA, Hiromi
Chiba 270-11 (JP)**

(74) Representative: **Boeters, Hans Dietrich et al
BOETERS & LIECK
Oberanger 32
80331 München (DE)**

(56) References cited:
**EP-A- 0 202 411          JP-A- 5 200 272
JP-A- 9 150 032          JP-B- 59 011 329
JP-B- 61 006 689          US-A- 4 400 363
US-A- 5 294 420**

EP 0 882 491 B1

**Description**

TECHNICAL FIELD

The present invention relates to an exhaust gas treatment process.

BACKGROUND ART

Conventionally, in exhaust gas treatment apparatus for treating exhaust gas which contains sulfur oxides ($SO_x$) and nitrogen oxides ($NO_x$), such as boiler exhaust gas, sintering furnace exhaust gas, waste incinerator exhaust gas, etc., exhaust gas having a relatively low concentration of sulfur oxides is passed through a moving-layer reactor filled with a carbonaceous catalyst such as activated carbon, activated coke, activated char, or the like and treated at a temperature of approximately 60 ° to 180° C, i. e. in a low-temperature region.

In this case, in order to concurrently remove sulfur oxides and nitrogen oxides (desulfurization and denitration) from exhaust gas and to repeatedly use the carbonaceous catalyst in the moving-layer reactor, ammonia gas ($NH_3$) is introduced into the exhaust gas (refer to Japanese Patent Application Laid-Open (kokai) No. 50-92858).

However, since exhaust gas is treated in a low-temperature region in the exhaust gas treatment apparatus, nitrogen oxides cannot be removed efficiently. In order to efficiently remove nitrogen oxides, exhaust gas can conceivably be treated at a temperature of 200° C or higher. In this case, however, a portion of a carbonaceous catalyst reacts with oxygen present in exhaust gas to form carbon dioxide gas.

Also, normally, boiler exhaust gas, waste incinerator exhaust gas, or like exhaust gas is at a temperature of about 150 ° C at the exit of an air heater, boiler, or the like. Sintering furnace exhaust gas or like exhaust gas is at a temperature of about 100° C. Thus, in order to treat exhaust gas at a temperature of 200 ° C or higher, the exhaust gas must be preheated.

Thus, there is proposed an exhaust gas treatment apparatus capable of concurrently removing sulfur oxides and nitrogen oxides in a low-temperature range between about 100° and 150 ° C (refer to Japanese Patent Publication (kokoku) No. 59-11329).

In this case, two crossflow type moving-layer reactors are used. First, exhaust gas into which ammonia gas has been introduced is charged into the first moving-layer reactor so as to remove most sulfur oxides from the exhaust gas. Subsequently, ammonia gas is again introduced into the exhaust gas discharged from the first moving-layer reactor. Then, the exhaust gas is charged into the second moving-layer reactor so as to remove nitrogen oxides from the exhaust gas.

As represented by formulas (1) and (2), in a process for removing sulfur oxides and nitrogen oxides from exhaust gas through the introduction of ammonia gas into the exhaust gas, sulfur oxides in the exhaust gas come into contact with a carbonaceous catalyst and are adsorbed onto the carbonaceous catalyst to thereby be removed in the form of sulfuric acid.

$$SO_2 + 1/2O_2 + H_2O \rightarrow H_2SO_4 \qquad (1)$$

$$SO_3 + H_2O \rightarrow H_2SO_4 \qquad (2)$$

As represented by formulas (3) and (4), the sulfuric acid and ammonia gas react (undergo a neutralization reaction) to form ammonium salt.

$$H_2SO_4 + NH_3 \rightarrow NH_4HSO_4 \qquad (3)$$

$$NH_4HSO_4 + NH_3 \rightarrow (NH_4)_2SO_4 \qquad (4)$$

Thus, as a result of the adsorption of sulfuric acid and ammonium salt, the carbonaceous catalyst is gradually deactivated and therefore must be regenerated through the application of heat.

Meanwhile, as represented by formula (5), nitrogen oxides in exhaust gas react with ammonia gas through the catalysis of the carbonaceous catalyst to form nitrogen.

$$NH_3 + NO + 1/4O_2 \rightarrow N_2 + 3/2H_2O \qquad (5)$$

When exhaust gas is treated at a temperature of about 150 ° C or in a lower temperature region, most ammonia gas is consumed by the reactions of the formulas (3) and (4).

Thus, when nitrogen oxides are to be removed at a temperature of about 150° C or in a lower temperature region, a required amount of ammonia gas to be introduced must be determined through the addition of the amount of ammonia gas to be consumed by the reactions of the formulas (3) and (4).

Specifically, there substantially exists the following relation between the amount of ammonia gas introduced and the denitration rate.

(Amount of ammonia gas introduced ppm) = (concentration of sulfur oxides ppm $\times$ desulfurization rate) $\times$ (a mole ratio of 0. 5 to 2. 0 between $NH_4^+$ and $SO_4^{2-}$ to be adsorbed onto carbonaceous catalyst) + (concentration of nitrogen oxides ppm $\times$ denitration rate) + (amount of adsorption of ammonia gas ppm) + (amount of leakage of ammonia gas ppm)

Particularly, when the amount of ammonia gas introduced is increased in order to increase the denitration rate, the mole ratio (0. 5 to 2.0) between $NH_4^+$ and $SO_4^{2-}$ ($NH_4^+ / SO_4^{2-}$) to be adsorbed onto a carbonaceous catalyst increases to about 1 or higher. In this case, even when such a carbonaceous catalyst is regenerated through the application of heat, the rate of decomposition of ammonium salt into nitrogen drops. The mechanism of decomposition of $NH_4^+$ adsorbed on the surface of the carbonaceous catalyst into nitrogen during regeneration through the application of heat is not known definitely, but conceivably proceeds in the following manner.

Specifically, as represented by the following formulas, sulfuric acid and the ammonium salt of the sulfuric acid adsorbed on the surface of a carbonaceous catalyst dissociate in the process of heating of the carbonaceous catalyst.

$$H_2SO_4 \rightarrow SO_3 + H_2O \qquad (6)$$

$$(NH_4)_2SO_4 \rightarrow NH_4HSO_4 + NH_3 \qquad (7)$$

$$NH_4HSO_4 \rightarrow NH_3 + SO_3 + H_2O \qquad (8)$$

Subsequently, as represented by the following formulas, sulfur trioxide, ammonia gas, etc. are decomposed into sulfur dioxide and nitrogen by oxidation-reduction reaction.

$$2/3NH_3 + SO_3 \rightarrow SO_2 + H_2O + 1/3N_2 \qquad (9)$$

$$SO_3 + 1/2C \rightarrow SO_2 + 1/2CO_2 \qquad (10)$$

As seen from formula (9), as the amount of adsorption of $NH_4^+$ increases as compared to that of $SO_4^{2-}$ , the rate of decomposition of $NH_4^+$ into nitrogen drops.

As a result, when a carbonaceous catalyst which has been used under an operating condition of a large amount of ammonia gas introduced is regenerated through the application of heat to thereby collect sulfur oxides, a large amount of ammonia gas becomes mixed in the sulfur oxides. In this case, even when an attempt is made to obtain sulfuric acid, sulfur, and the like from the collected sulfur oxides, the purity of by-products drops, or an apparatus for producing by-products becomes clogged.

Also, when an attempt is made to purify the collected sulfur oxides by washing in water, large amounts of ammonium salt and the like are dissolved in waste water, causing loss.

Further, in removal of sulfur oxides and nitrogen oxides from exhaust gas having a temperature of about 100 ° C or lower through the introduction of ammonia gas into the exhaust gas, ammonium salt adsorbed on a carbonaceous catalyst destroys pores in the carbonaceous catalyst, causing the carbonaceous catalyst to be powdered. In this case, as the denitration rate increases through increase in the amount of ammonia gas introduced, the amount of ammonium salt produced increases, and thus the powdering of the carbonaceous catalyst becomes more noticeable.

Thus, there is proposed an exhaust gas treatment apparatus wherein the flow of exhaust gas, i. e. an exhaust gas flow, is divided into two (Japanese Patent Publication (kokoku) No. 1-54089).

In this case, an exhaust gas flow is divided into first and second exhaust gas flows. Ammonia gas is introduced into exhaust gas of the first exhaust gas flow, and this exhaust gas is charged into a first moving-layer reactor, while exhaust gas of the second exhaust gas flow is charged into a second moving-layer reactor. A carbonaceous catalyst discharged from the bottom portion of the first moving-layer reactor is charged into the top portion of the second moving-layer reactor, while a carbonaceous catalyst discharged from the bottom portion of the second moving-layer reactor is regenerated in a regenerator through the application of heat and then charged into the top portion of the first moving-layer reactor.

In this case, on the carbonaceous catalyst in the first moving-layer reactor the $NH_4^+/ SO_4^{2-}$ mole ratio is approximately 1. However, since the carbonaceous catalyst discharged from the first moving-layer reactor again adsorbs substantially the same amount of $SO_4^{2-}$ in the second moving-layer reactor, on the carbonaceous catalyst discharged from the second moving-layer reactor the $NH_4^+ / SO_4^{2-}$ mole ratio becomes approximately 0.5. Accordingly, when the carbonaceous catalyst discharged from the second moving-layer reactor is regenerated by the application of heat to thereby collect sulfur oxides, a large amount of ammonia gas can be prevented from becoming mixed in the sulfur oxides.

However, in the conventional exhaust gas treatment apparatus, the carbonaceous catalyst discharged from the first moving-layer reactor is mixed up and charged into the second moving-layer reactor. Thus, when the carbonaceous catalyst which has moved downward along a gas inlet side within the first moving-layer reactor and has adsorbed a relatively large amount of nitrogen oxides, ammonia gas, hydrogen halide, etc. moves downward along a gas outlet side within the second moving-layer reactor, the nitrogen oxides, ammonia gas, hydrogen halide, etc. are desorbed and become mixed in exhaust gas, causing impairment in the processing capability of the exhaust gas treatment apparatus.

Also, not only are two moving-layer reactors required, but also a conveyor or a like conveying line for conveying a carbonaceous catalyst must be provided between the two moving-layer reactors, resulting in an increase in cost.

An object of the present invention is to provide an exhaust gas treatment process capable of solving problems involved in the conventional exhaust gas treatment apparatus, removing sulfur oxides and nitrogen oxides in a low-temperature region without a large amount of ammonia gas becoming mixed in collected sulfur oxides, improving the processing capability, and reducing cost.

DISCLOSURE OF THE INVENTION

To achieve the above object, in an exhaust gas treatment process of the present invention, exhaust gas is passed for treatment through a cross-flow moving layer which accommodates a carbonaceous catalyst, and the carbonaceous catalyst which has become inactive in association with the treatment of exhaust gas is regenerated.

An exhaust gas flow is divided into a plurality of exhaust gas flows. Ammonia gas is introduced into exhaust gas of a predetermined exhaust gas flow among the exhaust gas flows. The exhaust gas into which ammonia gas has been introduced is charged for treatment into a predetermined portion of the moving-layer which accommodates the carbonaceous catalyst.

Also, the amount of the ammonia gas that is introduced into exhaust gas is adjusted such that the mole ratio between $NH_4^+$ and $SO_4^{2-}$ ($NH_4^+ / SO_4^{2-}$) adsorbed on the carbonaceous catalyst which is discharged from the bottom portion of the moving layer and charged into a regenerator becomes 1 or less.

In this case, the $NH_4^+ / SO_4^{2-}$ mole ratio is relatively high on the carbonaceous catalyst located at the predetermined portion of the moving layer. However, as the carbonaceous catalyst moves downward in the moving layer, the carbonaceous catalyst adsorbs $SO_4^{2-}$; accordingly, the $NH_4^+ / SO_4^{2-}$ mole ratio becomes sufficiently low on the carbonaceous catalyst discharged from a moving-layer reactor. Therefore, when the carbonaceous catalyst discharged from the moving-layer reactor is regenerated through the application of heat to thereby collect sulfur oxides, a large amount of ammonia gas can be prevented from becoming mixed in the collected sulfur oxides.

Also, since ammonia gas is introduced into exhaust gas, sulfur oxides and nitrogen oxides can be removed in a low-temperature region.

Further, since the carbonaceous catalyst is uniformly moved downward within a single moving-layer reactor from the upper portion thereof toward the lower portion thereof, the carbonaceous catalyst within the moving layer does not become mixed up. Accordingly, nitrogen oxides, ammonia gas, hydrogen halide, etc. which have been adsorbed onto the carbonaceous catalyst on the side of the gas inlet chamber are not desorbed and do not become mixed in exhaust gas on the side of a gas outlet chamber; thus, the processing capability of an exhaust gas treatment apparatus can be improved.

Also, since only a single moving-layer reactor is provided, there is no need for installing a conveyor or a like conveying line for conveying the carbonaceous catalyst. Thus, the cost of an exhaust gas treatment apparatus can be reduced accordingly.

In another exhaust gas treatment process of the present invention, the exhaust gas into which ammonia gas has been introduced is charged into the upper portion of the moving layer, while the exhaust gas into which ammonia gas is not introduced is charged into the lower portion of the moving layer.

In this case, the $NH_4^+ / SO_4^{2-}$ mole ratio is relatively high on the carbonaceous catalyst located at the upper portion of the moving layer. However, as the carbonaceous catalyst moves downward in the moving layer, the carbonaceous catalyst adsorbs $SO_4^{2-}$; accordingly, the $NH_4^+ / SO_4^{2-}$ mole ratio becomes sufficiently low on the carbonaceous catalyst discharged from a moving-layer reactor. Therefore, when the carbonaceous catalyst discharged from the moving-layer reactor is regenerated through the application of heat to thereby collect sulfur oxides, a large amount of ammonia gas can be prevented from becoming mixed in the collected sulfur oxides.

In still another exhaust gas treatment process of the present invention, the exhaust gas into which ammonia gas has been introduced is charged into the upper and intermediate portions of the moving layer, while the exhaust gas into which ammonia gas is not introduced is charged into the lower portion of the moving layer.

In this case, the $NH_4^+ / SO_4^{2-}$ mole ratio is relatively high on the carbonaceous catalyst located at the upper and intermediate portions of the moving layer. However, as the carbonaceous catalyst moves downward in the moving layer, the carbonaceous catalyst adsorbs $SO_4^{2-}$; accordingly, the $NH_4^+ / SO_4^{2-}$ mole ratio becomes sufficiently low on the carbonaceous catalyst discharged from a moving-layer reactor. Therefore, when the carbonaceous catalyst discharged from the moving-layer reactor is regenerated through the application of heat to thereby collect sulfur oxides, a large amount of ammonia gas can be prevented from becoming mixed in the collected sulfur oxides.

In a further exhaust gas treatment process of the present invention, the amount of ammonia gas to be introduced into the exhaust gas to be charged into the upper portion of the moving layer is made relatively small, while the amount of ammonia gas to be introduced into the exhaust gas to be charged into the intermediate portion of the moving layer is made relatively large.

In this case, the $NH_4^+ / SO_4^{2-}$ mole ratio is relatively high on the carbonaceous catalyst located at the upper and intermediate portions of the moving layer. However, as the carbonaceous catalyst moves downward in the moving layer, the carbonaceous catalyst adsorbs $SO_4^{2-}$; accordingly, the $NH_4^+ / SO_4^{2-}$ mole ratio becomes sufficiently low on the carbonaceous catalyst discharged from a moving-layer reactor. Therefore, when the carbonaceous catalyst discharged from the moving-layer reactor is regenerated through the application of heat to thereby collect sulfur oxides, a large amount of ammonia gas can be prevented from becoming mixed in the collected sulfur oxides.

Since an appropriate amount of ammonia gas is introduced into exhaust gas of each exhaust gas flow, the amount of leakage of ammonia gas can be made relatively small at the upper portion of the moving layer, and the denitration rate can be made relatively high. Also, there can be made relatively small the amount of ammonia gas in desorption gas which is desorbed from the carbonaceous catalyst in association with the regeneration of the carbonaceous catalyst in a regenerator.

In a still further exhaust gas treatment process of the present invention, the exhaust gas flow is divided into first and second exhaust gas flows. Ammonia gas is introduced into exhaust gas of the first exhaust gas flow, which exhaust gas is charged into the upper portion of the moving layer. Ammonia gas is introduced into exhaust gas of the second exhaust gas flow in a maximum amount of 1/3 the amount of ammonia gas introduced into the exhaust gas of the first exhaust gas flow, which exhaust gas of the second exhaust gas flow is charged into the lower portion of the moving layer.

In this case, the mole ratio between $NH_4^+$ and $SO_4^{2-}$ ($NH_4^+ / SO_4^{2-}$) discharged from the moving-layer reactor can be made 1 or less.

In a still further exhaust gas treatment process of the present invention, a carbonaceous catalyst which moves downward within the moving layer is divided into a plurality of flows.

In this case, since the carbonaceous catalyst which moves downward within the moving layer is divided into a plurality of flows, the carbonaceous catalyst within the moving layer can be reliably prevented from becoming mixed up. Accordingly, nitrogen oxides, ammonia gas, hydrogen halide, etc. which have been adsorbed onto the carbonaceous catalyst on the side of a gas inlet chamber are prevented from becoming desorbed and becoming mixed in exhaust gas on the side of a gas outlet chamber. Thus, the processing capability of an exhaust gas treatment apparatus can be further improved.

## BRIEF DESCRIPTION OF DRAWINGS

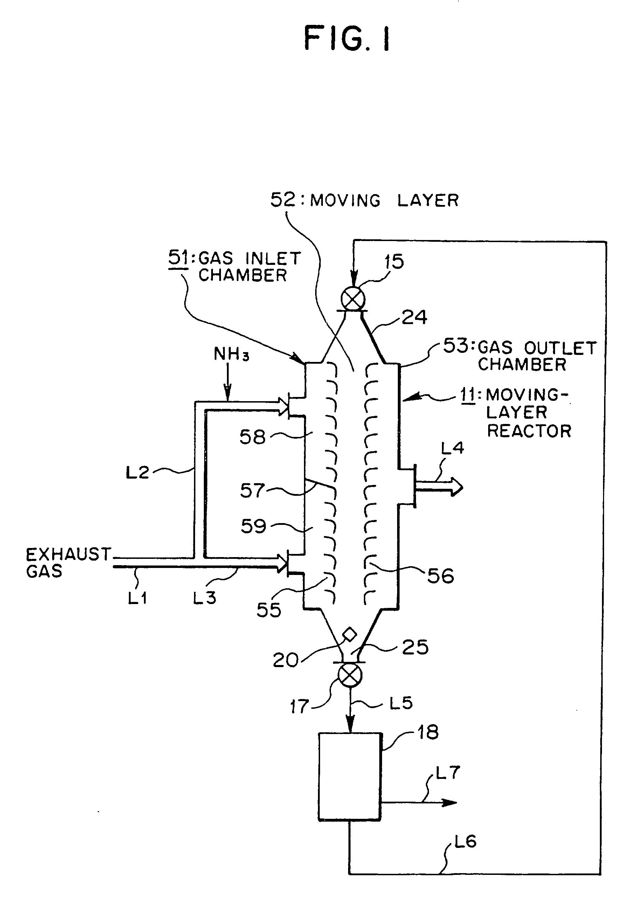

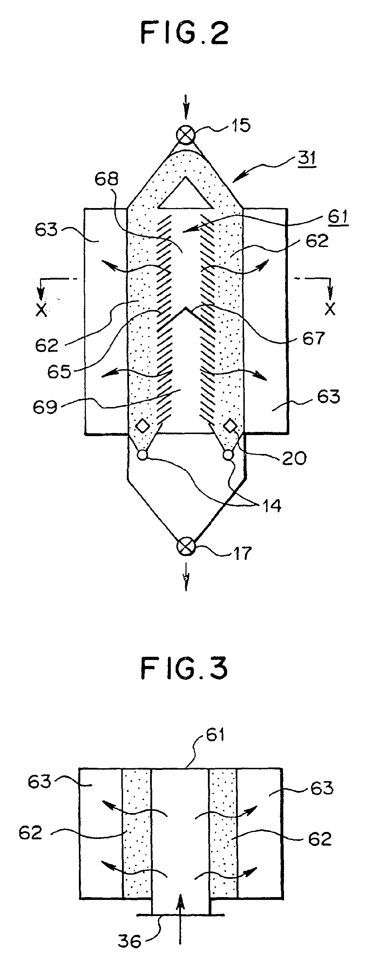

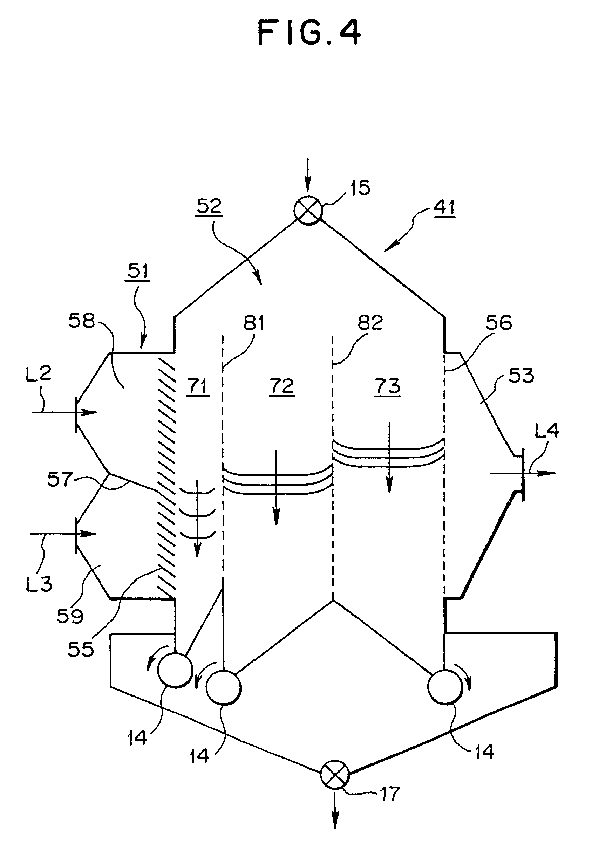

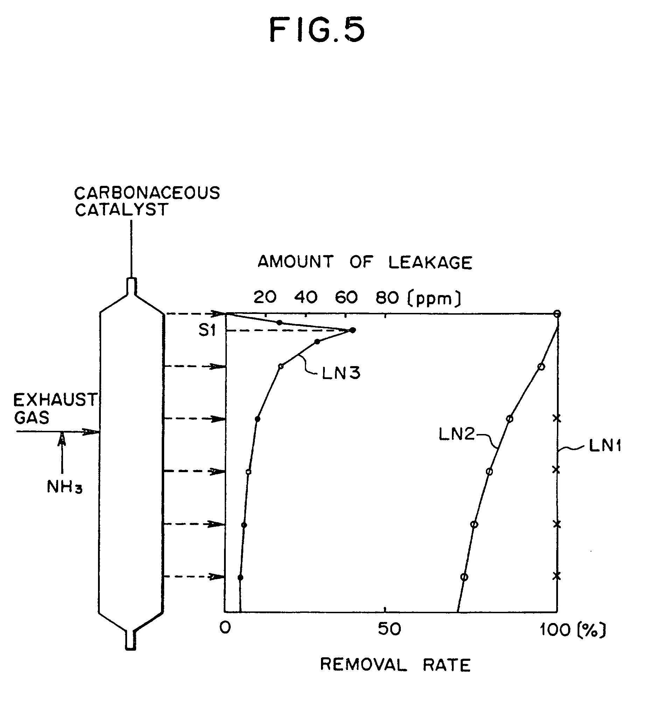

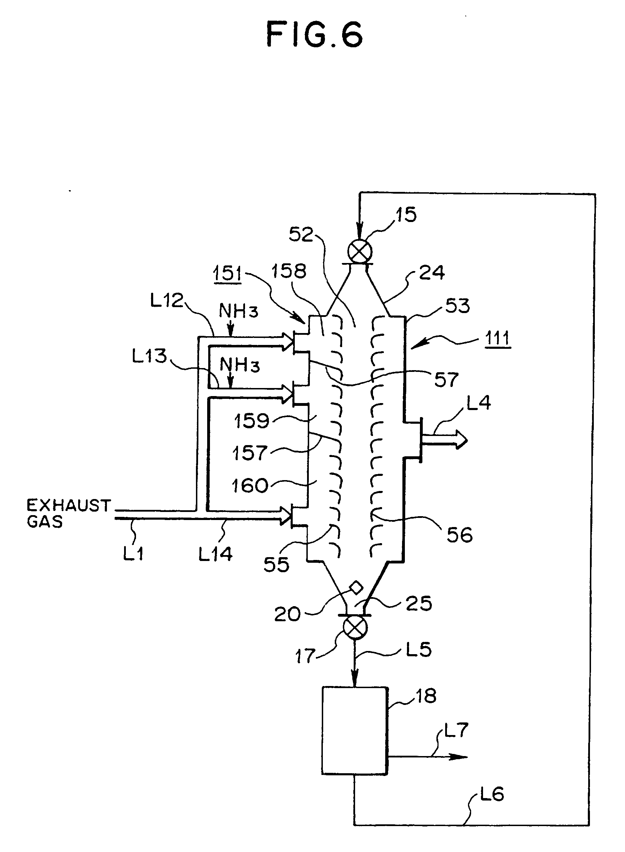

FIG. 1 is a schematic view of an exhaust gas treatment apparatus according to a first embodiment of the present invention; FIG. 2 is a schematic view of an exhaust gas treatment apparatus according to a second embodiment of the present invention; FIG. 3 is a sectional view taken along X-X of FIG. 2; FIG. 4 is a schematic view of an exhaust gas treatment apparatus according to a third embodiment of the present invention; FIG. 5 is a graph showing the pattern of the amount of leakage of ammonia gas on the outlet side of a moving layer; and FIG. 6 is a schematic view of an exhaust gas treatment apparatus according to a fourth embodiment of the present invention.

## BEST MODE FOR CARRYING OUT THE INVENTION

The embodiments of the present invention will next be described in detail with reference to the drawings.

FIG. 1 is a schematic view of an exhaust gas treatment apparatus according to a first embodiment of the present invention.

In FIG. 1, reference numeral 11 denotes a crossflow type moving-layer reactor. The moving-layer reactor 11 includes a gas inlet chamber 51, a crossflow type moving layer 52 which accommodates an unillustrated carbonaceous catalyst such as activated carbon, activated coke, activated char, or the like and moves the carbonaceous catalyst downward, and a gas outlet chamber 53. The gas inlet chamber 51 and the moving layer 52 are separated from each other by an inlet-side louver 55, and the moving layer 52 and the gas outlet chamber 53 are separated from each other by an outlet-side louver 56.

The gas inlet chamber 51 is divided by a partition 57 disposed at the center thereof such that a first compartment 58 is formed on the upstream side with respect to the moving direction of the carbonaceous catalyst and a second compartment 59 is formed on the downstream side. The partition 57 is slanted down toward the moving layer 52 so as to prevent dust in exhaust gas within the first compartment 58 from accumulating thereon.

Line L1 for feeding exhaust gas having a temperature of about 60 ° to 180° C divides into a first line L2 and a second line L3. Accordingly, an exhaust gas flow in the line L1 divides into a plurality of exhaust gas flows, specifically a first exhaust gas flow in the first line L2 and a second exhaust gas flow in the second line L3. Exhaust gas of the first exhaust gas flow is charged into the moving layer 52 at an upper portion serving as a predetermined portion via the first compartment 58, and exhaust gas of the second exhaust gas flow is charged into the moving layer 52 at a lower portion via the second compartment 59. Ammonia gas ($NH_3$) is introduced into exhaust gas of the first exhaust gas flow.

Exhaust gas charged into the moving layer 52 comes into contact with the carbonaceous catalyst which moves downward within the moving layer 52, so that sulfur oxides and nitrogen oxides are removed from the exhaust gas. The exhaust gas from which sulfur oxides and nitrogen oxides have been removed is discharged from the gas outlet chamber 53 into a line L4. Subsequently, the exhaust gas discharged into the line L4 is released from an unillustrated stack into the atmosphere without removal of dust or after removal of dust by a dust collector.

Meanwhile, the carbonaceous catalyst is gradually charged into the moving-layer reactor 11 from a charge port 24 formed at the top portion of the moving-layer reactor 11, and then moves downward within the moving layer 52 to perform desulfurization and denitration. Then, the carbonaceous catalyst is flow-straightened by a flow straightener 20 disposed at the bottom portion of the moving-layer reactor 11 and then discharged from a discharge port 25 into a line L5 via a carbonaceous catalyst discharge valve 17. The discharged carbonaceous catalyst is sent to a regenerator 18 through the line L5. The carbonaceous catalyst is regenerated within the regenerator 18 in a high-temperature inert gas atmosphere having a temperature of about 300 ° to 600° C. The regenerated carbonaceous catalyst is sent to the charge port 24 through a line L6 and used again. Reference numeral 15 denotes a carbonaceous catalyst charge valve.

In the regenerator 18, high-concentration sulfur dioxide gas generated in association with regeneration of the carbonaceous catalyst is discharged into a line L7. The gas discharged into the line L7 is, after refinement through washing in water or a like process or without refinement, sent to a process for collecting by-products such as sulfuric acid, sulfur, gypsum, and the like.

In this case, the $NH_4^+$ / $SO_4^{2-}$ mole ratio is relatively high on the carbonaceous catalyst located at the upper portion of the moving layer 52. However, as the carbonaceous catalyst moves downward in the moving layer 52, the carbonaceous catalyst adsorbs $SO_4^{2-}$; accordingly the $NH_4^+$ / $SO_4^{2-}$ mole ratio becomes sufficiently low on the carbonaceous catalyst discharged from the moving-layer reactor 11. Therefore, when the carbonaceous catalyst discharged from the moving-layer reactor 11 is regenerated through the application of heat to thereby collect sulfur oxides, a large amount of ammonia gas can be prevented from becoming mixed in the collected sulfur oxides.

Also, since the carbonaceous catalyst is uniformly moved downward within the single moving-layer reactor 11 from the upper portion thereof toward the lower portion thereof, the carbonaceous catalyst within the moving layer 52 does not become mixed up. Accordingly, nitrogen oxides, ammonia gas, hydrogen halide, etc. which have been adsorbed onto the carbonaceous catalyst on the side of the gas inlet chamber 51 do not become desorbed and do not become mixed in exhaust gas on the side of the gas outlet chamber 53; thus, the processing capability of the exhaust gas treatment apparatus can be improved.

Also, since only the single moving-layer reactor 11 is disposed, there is no need for installing a conveyor or a like conveying line for conveying the carbonaceous catalyst. Thus, the cost of the exhaust gas treatment apparatus can be reduced accordingly.

In the present embodiment, the ratio between the amount of exhaust gas of the first exhaust gas flow and the amount of exhaust gas of the second exhaust gas flow is determined as adequate based on exhaust gas properties in relation to the concentration of sulfur oxides and the concentration of nitrogen oxides, a target denitration rate, etc. The amount of exhaust gas of the first exhaust gas flow accounts for approximately 1/3 to 2/3 the amount of the entire exhaust gas.

In the present embodiment, ammonia gas is only introduced into exhaust gas of the first exhaust gas flow, but a small amount of ammonia gas may also be introduced into exhaust gas of the second exhaust gas flow.

In this case, the mole ratio between $NH_4^+$ and $SO_4^{2-}$ ($NH_4^+$ /$SO_4^{2-}$) adsorbed on the carbonaceous catalyst which is discharged from the bottom portion of the moving-layer reactor 11 and charged into the regenerator 18 is preferably 0. 7 to 1 or less. Thus, the amount of ammonia gas in exhaust gas charged into the lower portion of the moving layer 52 is made 1/3 to 1/4 the amount of ammonia gas in exhaust gas charged into the upper portion or less.

Further, the present embodiment uses, as the carbonaceous catalyst, activated carbon, activated coke, activated char, or the like obtained by activating coal or the like through oxidation treatment, thermal treatment, steam treatment, or a like treatment, but may use activated carbon, activated coke, activated char, or the like which is made to carry a metallic compound of vanadium, iron, copper, manganese, or a like metal.

Next, a second embodiment of the present invention will be described.

FIG. 2 is a schematic view of an exhaust gas treatment apparatus according to the second embodiment of the present invention. FIG. 3 is a sectional view taken along X-X of FIG. 2.

In FIGS. 2 and 3, reference numeral 31 denotes a crossflow type moving-layer reactor. The moving-layer reactor 31 includes a gas inlet chamber 61 which is formed at the center thereof, a moving layer 62 which is formed outside the gas inlet chamber 61, accommodates an unillustrated carbonaceous catalyst, and moves the carbonaceous catalyst downward, and a gas outlet chamber 63 which is formed outside the moving layer 62. The gas inlet chamber 61 and the moving layer 62 are separated from each other by an inlet-side louver 65, and the moving layer 62 and the gas outlet chamber 63 are separated from each other by an unillustrated outlet-side louver.

The gas inlet chamber 61 is divided by a partition 67 disposed at the center thereof such that a first compartment 68 is formed on the upstream side with respect to the moving direction of the carbonaceous catalyst and a second compartment 69 is formed on the downstream side. The partition 67 is slanted down toward the moving layer 62 so as to prevent dust in exhaust gas within the first compartment 68 from accumulating thereon.

In this case, exhaust gas into which ammonia gas is introduced is charged into the first compartment 68, and exhaust gas into which ammonia gas is not introduced is charged into the second compartment 69.

Exhaust gas in the first compartment 68 and exhaust gas in the second compartment 69 are charged into the moving layer 62.

Exhaust gas charged into the moving layer 62 comes into contact with the carbonaceous catalyst which moves downward within the moving layer 62, so that sulfur oxides and nitrogen oxides are removed from the exhaust gas.

Reference numeral 14 denotes a catalyst fixed-rate discharger such as a roll feeder or the like; numeral 15 denotes a carbonaceous catalyst charge valve; numeral 17 denotes a carbonaceous catalyst discharge valve; numeral 20 denotes a flow straightener; and numeral 36 denotes an exhaust gas inlet.

Next, a third embodiment of the present invention will be described.

FIG. 4 is a schematic view of an exhaust gas treatment apparatus according to a third embodiment of the present invention. Notably, the same structural features as those of the first embodiment are denoted by common reference numerals, and their description is omitted.

In this case, the moving layer 52 is partitioned into a front chamber 71, an intermediate chamber 72, and a rear chamber 73 by means of screens 81 and 82 such as perforated plates or the like. Accordingly, the flow of the carbonaceous catalyst is divided into three, so that the carbonaceous catalyst within the moving layer 52 can be reliably prevented from becoming mixed up. Therefore, the carbonaceous catalyst within the front chamber 71 never enters the intermediate chamber 72, and the carbonaceous catalyst within the intermediate chamber 72 never enters the rear chamber 73.

As a result, nitrogen oxides, ammonia gas, hydrogen halide, etc. which have been adsorbed onto the carbonaceous catalyst on the side of the gas inlet chamber 51 are prevented from becoming desorbed and becoming mixed in exhaust gas on the side of the gas outlet chamber 53. Thus, the processing capability of the exhaust gas treatment apparatus can further be improved.

Also, the catalyst fixed-rate dischargers 14 such as roll feeders or the like are disposed at the bottom ends of the front, intermediate, and rear chambers 71, 72, and 73, respectively. Accordingly, for example, by setting the speed of moving the carbonaceous catalyst downward within the front chamber 71 to be relatively high and setting the speed of moving the carbonaceous catalyst downward within the rear chamber 73 to be relatively low, the moving-layer reactor 41 can be prevented from being clogged with dust in exhaust gas, and there can be reduced the amount of dust in exhaust gas discharged from the gas outlet chamber 53 into the line L4.

In the present embodiment, the interior of the moving-layer reactor 41 is divided into three chambers, namely the front chamber 71, the intermediate chamber 72, and the rear chamber 73. However, the interior of the moving-layer reactor 41 may be divided into any number of chambers.

Generally, when exhaust gas containing sulfur oxides at a concentration of 50 to 100 ppm or less (low-$SO_x$ exhaust gas) is treated so as to remove nitrogen oxides therefrom, ammonia gas in exhaust gas becomes excessive at the upper portion of the moving layer 52, resulting in an increase in the amount of leakage of ammonia gas on the outlet side.

FIG. 5 is a graph showing the pattern of the amount of leakage of ammonia gas on the outlet side of a moving layer. In FIG. 5, the removal rates of sulfur oxides and nitrogen oxides and the amount of leakage of ammonia gas are read along the axis of abscissa, and location on a moving layer is read along the axis of ordinate.

In FIG. 5, LN1 is a line showing the removal rate of sulfur oxides, LN2 is a line showing the removal rate of nitrogen oxides, and LN3 is a line showing the amount of leakage of ammonia gas.

As seen from FIG. 5, generally, the amount of leakage of ammonia gas increases from the upper end of a moving layer toward location S1 near the upper end and gradually decreases from the location S1 toward the lower end of the moving layer after assuming a peak value at the location S1.

Accordingly, in the aforementioned embodiments, when exhaust gas containing sulfur oxides at a concentration of 50 to 100 (ppm) or less is treated so as to remove nitrogen oxides therefrom, the amount of sulfuric acid generated through adsorption on a carbonaceous catalyst becomes relatively small. Accordingly, the amount of ammonia gas which reacts with sulfuric acid becomes relatively small, so that ammonia gas in exhaust gas becomes excessive and leaks.

Thus, ammonia gas in exhaust gas becomes particularly excessive at the upper portions of the moving layers 52 (FIGS. 1 and 4) and 62 (FIG. 2), so that the amount of leakage of ammonia gas becomes excessively large. This is for the following reason. When a carbonaceous catalyst is regenerated within the regenerator 18 in a high-temperature inert gas atmosphere having a temperature of about 300 ° to 600° C, a reductive substance is generated on the surface of the carbonaceous catalyst. When the thus-regenerated carbonaceous catalyst is charged into the moving layer, the reductive substance is utilized for reducing nitrogen oxides. As a result, the amount of ammonia gas consumed for reaction with nitrogen oxides decreases accordingly.

Notably, when a carbonaceous catalyst which has adsorbed a large amount of sulfur oxides and ammonia gas is regenerated, or when an oxidizer, ammonia gas, or the like is introduced into the regenerator 18 in order to improve the activeness of the carbonaceous catalyst, the amount of a reductive substance generated on the surface of the carbonaceous catalyst becomes relatively large. Consequently, the amount of leakage of ammonia gas at the upper portions of the moving layers 52 and 62 increases noticeably.

Next will be described a fourth embodiment of the present invention configured to suppress an increase in the amount of leakage of ammonia gas at the upper portions of the moving layers 52 and 62.

FIG. 6 is a schematic view of an exhaust gas treatment apparatus according to the fourth embodiment of the present invention.

In FIG. 6, reference numeral 111 denotes a crossflow type moving-layer reactor. The moving-layer reactor 111 includes a gas inlet chamber 151, a crossflow type moving layer 52 which accommodates an unillustrated carbonaceous catalyst and moves the carbonaceous catalyst downward, and a gas outlet chamber 53. The gas inlet chamber 151 and the moving layer 52 are separated from each other by an inlet-side louver 55, and the moving layer 52 and the gas outlet chamber 53 are separated from each other by an outlet-side louver (or a screen, etc.) 56.

The gas inlet chamber 151 is divided by partitions 57 and 157 disposed therein such that a first compartment 158 is formed on the upstream side with respect to the moving direction of the carbonaceous catalyst, a second compartment 159 is formed at an intermediate portion, and a third compartment 160 is formed on the downstream side.

Line L1 for feeding exhaust gas having a temperature of about 60 ° to 180° C divides into a first line L12, a second line L13, and a third line L14. Accordingly, an exhaust gas flow in the line L1 divides into a plurality of exhaust gas flows, specifically a first exhaust gas flow in the first line L12, a second exhaust gas flow in the second line L13, and a third exhaust gas flow in the third line L14. Exhaust gas of the first exhaust gas flow is charged into the moving layer 52 at an upper portion serving as a predetermined portion via the first compartment 158, exhaust gas of the second exhaust gas flow is charged into the moving layer 52 at an intermediate portion serving as a predetermined portion via the second compartment 159, and exhaust gas of the third exhaust gas flow is charged into the moving layer 52 at a lower portion via the third compartment 160.

In the present embodiment, the ratios among the amount of exhaust gas of the first exhaust gas flow, the amount of exhaust gas of the second exhaust gas flow, and the amount of exhaust gas of the third exhaust gas flow are determined as adequate based on exhaust gas properties in relation to the concentration of sulfur oxides and the concentration of nitrogen oxides, a target denitration rate, an allowable amount of leakage of ammonia gas, etc., and are substantially (0.05 to 0.2):(0.2 to 0.5):(0.3 to 0.6).

Ammonia gas ($NH_3$) is introduced into exhaust gas of each of the first and second exhaust gas flows. In this case, the amount of ammonia gas introduced is adjusted such that the mole ratio between $NH_4^+$ and $SO_4^{2-}$ ($NH_4^+$ / $SO_4^{2-}$) adsorbed on the carbonaceous catalyst which is discharged from the bottom portion of the moving-layer reactor 111 and charged into the regenerator 18 becomes 0.7 to 1 or less.

Exhaust gas charged into the moving layer 52 comes into contact with the carbonaceous catalyst which moves downward within the moving layer 52, so that sulfur oxides and nitrogen oxides are removed from the exhaust gas. The exhaust gas from which sulfur oxides and nitrogen oxides have been removed is discharged from the gas outlet chamber 53 into a line L4. Subsequently, the exhaust gas discharged into the line L4 is released from an unillustrated stack into the atmosphere without removal of dust or after removal of dust by a dust collector.

Meanwhile, the carbonaceous catalyst is gradually charged into the moving-layer reactor 111 from a charge port 24 formed at the top portion of the moving-layer reactor 111, and then moves downward within the moving layer 52 to perform desulfurization and denitration. Then, the carbonaceous catalyst is flow-straightened by a flow straightener 20 disposed at the bottom portion of the moving-layer reactor 111 and then discharged from a discharge port 25 into a line L5 via a carbonaceous catalyst discharge valve 17. The discharged carbonaceous catalyst is sent to the regenerator 18 through the line L5. The carbonaceous catalyst is regenerated within the regenerator 18 in a high-temperature inert gas atmosphere having a temperature of about 300 ° to 600° C. The regenerated carbonaceous catalyst is sent to the charge port 24 through a line L6 and used again. Reference numeral 15 denotes a carbonaceous catalyst charge valve.

In the regenerator 18, high-concentration sulfur dioxide gas generated in association with regeneration of the carbonaceous catalyst is discharged into a line L7. The gas discharged into the line L7 is, after refinement through washing in water or a like process or without refinement, sent to a process for collecting by-products such as sulfuric acid, sulfur, gypsum, and the like.

In the present embodiment, an exhaust gas flow is divided into the first, second, and third exhaust gas flows, and an appropriate amount of ammonia gas is introduced into each of the first and second exhaust gas flows. Thus, in comparison with the case of dividing an exhaust gas flow into two exhaust gas flows, the amount of leakage of ammonia gas can be made smaller at the upper portion of the moving layer 52, and the denitration rate can be made higher. Also, there can be made smaller the amount of ammonia gas in desorption gas which is desorbed from the carbonaceous catalyst in association with the regeneration of the carbonaceous catalyst in the regenerator 18.

Thus, the amount of ammonia gas which is introduced into exhaust gas to be charged into the upper portion of the moving layer 52 is made relatively small, the amount of ammonia gas which is introduced into exhaust gas to be charged into the intermediate portion of the moving layer 52 is made relatively large, and no ammonia gas is introduced into exhaust gas to be charged into the lower portion of the moving layer 52.

In the present embodiment, ammonia gas is only introduced into exhaust gas of each of the first and second exhaust gas flows, but a small amount of ammonia gas may also be introduced into exhaust gas of the third exhaust gas flow. In this case, the amount of ammonia gas to be introduced into exhaust gas of the third exhaust gas flow is made extremely small. Also, no ammonia gas may be introduced into exhaust gas to be charged into the upper portion of the moving layer 52.

Notably, in the present embodiment, an exhaust gas flow is divided into the first, second, and third exhaust gas flows. However, the exhaust gas flow may be divided into four exhaust gas flows or more, and the amount of ammonia gas to be introduced into exhaust gas of each exhaust gas flow may be adjusted to an appropriate value, thereby making relatively small the amount of leakage of ammonia gas at the corresponding portions of the moving layer 52 and making the denitration rate relatively high. Also, there can be made relatively small the amount of ammonia gas in desorption gas which is desorbed from the carbonaceous catalyst in association with the regeneration of the carbonaceous catalyst in the regenerator 18.

[Example 1]

Exhaust gas which contained 150 ppm of sulfur oxides, 200 ppm of nitrogen oxides, 20 ppm of hydrogen chloride, 10% of water, and 13% of oxygen and had a temperature of 100 ° C was fed into the line L1 (FIG. 1) at 1000 $m^3$ N/h and dividedly led into the first line L2 at 500 $m^3$ N/h and into the second line L3 at 500 $m^3$ N/h. Ammonia gas was introduced into exhaust gas of the first line L2 in an amount of 400 ppm. Subsequently, the ammonia-gas-introduced exhaust gas was charged into the upper portion of the moving layer 52 filled with 2.5 $m^3$ of granular activated carbon (diameter: approx. 7 mm; length: approx. 8 mm) serving as a carbonaceous catalyst.

In order to hold at approximately 0.7 the mole ratio between $NH_4^+$ and $SO_4^{2-}$ ($NH_4^+ / SO_4^{2-}$) adsorbed on the granular activated carbon discharged from the discharge port 25 of the moving-layer reactor 11, exhaust gas of the second line L3, into which no ammonia gas was introduced, was charged into the lower portion (lower half) of the moving layer 52.

The discharge rate of the granular activated carbon from the discharge port 25 of the moving-layer reactor 11 was set at 17. 5 kg/h so as to make the residence time of the granular activated carbon 50 hours in each of the upper and lower portions of the moving layer 52, making a total residence time of 100 hours.

As a result, at the upper portion of the moving layer 52, the denitration rate was 80%, the desulfurization rate was 100%, the removal rate of hydrogen chloride was 80%, and the amount of leakage of ammonia gas was 11 ppm.

At the lower portion of the moving layer 52, the denitration rate was 40%, the desulfurization rate was 100%, the removal rate of hydrogen chloride was 42%, and the amount of leakage of ammonia gas was 1 ppm.

Exhaust gas discharged from the upper portion of the moving layer 52 and exhaust gas discharged from the lower portion of the moving layer 52 were joined in the gas outlet chamber 53. The joined exhaust gas showed a denitration rate of 60%, a desulfurization rate of 100%, and a removal rate of hydrogen chloride of 61%, based on the original exhaust gas, while the amount of leakage of ammonia gas became 6 ppm.

[Example 2]

Exhaust gas which contained 50 ppm of sulfur oxides, 200 ppm of nitrogen oxides, 10% of water, and 13% of oxygen and had a temperature of 100 ° C was fed into the line L1 (FIG. 6) at 1000 $m^3$ N/h and dividedly led into the first line L12 at 100 $m^3$ N/h, into the second line L13 at 400 $m^3$ N/h, and into the third line L14 at 500 $m^3$ N/h. Ammonia gas was introduced into exhaust gas of the first line L12 in an amount of 150 ppm and into exhaust gas of the second line L13 in an amount of 337 ppm. Subsequently, the ammonia-gas-introduced exhaust gas of the first line L12 and the ammonia-gas-introduced exhaust gas of the second line L13 were charged into the upper and intermediate portions, respectively, of the moving layer 52 filled with 2.5 $m^3$ of granular activated carbon (diameter: approx. 7 mm; length: approx. 8 mm) serving as a carbonaceous catalyst.

In order to hold at approximately 0. 9 the mole ratio between $NH_4^+$ and $SO_4^{2-}$ ($NH_4^+ / SO_4^{2-}$) adsorbed on the granular activated carbon discharged from the discharge port 25 of the moving-layer reactor 111, exhaust gas of the third line L14, into which no ammonia gas was introduced, was charged into the lower portion (lower half) of the moving layer 52.

The discharge rate of the granular activated carbon from the discharge port 25 of the moving-layer reactor 11 was set at 17.5 kg/h so as to make the residence time of the granular activated carbon 10 hours in the upper portion of the moving layer 52, 40 hours in the intermediate portion, and 50 hours in the lower portion, making a total residence time of 100 hours.

As a result, at the upper portion of the moving layer 52, the denitration rate was 95%, the desulfurization rate was 100%, and the amount of leakage of ammonia gas was 12 ppm. At the intermediate portion of the moving layer 52, the denitration rate was 87%, and the amount of leakage of ammonia gas was 10 ppm. At the lower portion of the moving layer 52, the denitration rate was 52%, the desulfurization rate was 100%, and the amount of leakage of ammonia gas was 1 ppm.

Exhaust gas discharged from the upper portion of the moving layer 52, exhaust gas discharged from the intermediate portion of the moving layer 52, and exhaust gas discharged from the lower portion of the moving layer 52 were joined in the gas outlet chamber 53. The joined exhaust gas showed a denitration rate of 70.3%, and a desulfurization rate of 100%, based on the original exhaust gas, while the amount of leakage of ammonia gas became 5.7 ppm.

[Comparative Example 1]

The same exhaust gas as that of Example 1 was divided into halves. Ammonia gas was introduced in an amount of 400 ppm into exhaust gas of one half which was fed at 500 $m^3$ N/h. The ammonia-gas-introduced exhaust gas was charged into a first moving-layer reactor filled with 1.25 $m^3$ of granular activated carbon. In this case, the residence time of the granular activated carbon within the first moving-layer reactor was set at 50 hours.

As a result, in the first moving-layer reactor, the denitration rate was 80%, the desulfurization rate was 100%, the removal rate of hydrogen chloride was 80%, and the amount of leakage of ammonia gas was 11 ppm.

Exhaust gas of the other half which was fed at 500 $m^3$ N/h and into which no ammonia gas was introduced, was charged into a second moving-layer reactor filled with 1.25 $m^3$ of granular activated carbon (discharged from the first moving-layer reactor). In this case, the residence time of the granular activated carbon within the second moving-layer reactor was set at 50 hours.

As a result, in the second moving-layer reactor, the denitration rate was 28%, the desulfurization rate was 100%, the removal rate of hydrogen chloride was 30%, and the amount of leakage of ammonia gas was 9 ppm.

Exhaust gas discharged from the first moving-layer reactor and exhaust gas discharged from the second moving-layer reactor were joined. The joined exhaust gas showed a denitration rate of 54%, a desulfurization rate of 100%, and a removal rate of hydrogen chloride of 55%, based on the original exhaust gas, while the amount of leakage of ammonia gas became 10 ppm.

[Comparative Example 2]

The same exhaust gas as that of Example 2 was divided into halves. Ammonia gas was introduced in an amount of 300 ppm into exhaust gas of one half which was fed at 500 $m^3$ N/h. The ammonia-gas-introduced exhaust gas was charged into the upper portion of a moving-layer reactor. Exhaust gas of the other half which was fed at 500 $m^3$ N/h and into which no ammonia gas was introduced, was charged into the lower portion of the moving-layer reactor.

As a result, at the upper portion of the moving layer, the denitration rate was 85%, the desulfurization rate was 100%, and the amount of leakage of ammonia gas was 25 ppm. At the lower portion of the moving layer, the denitration rate was 45%, the desulfurization rate was 100%, and the amount of leakage of ammonia gas was 1 ppm.

Exhaust gas discharged from the upper portion of the moving layer and exhaust gas discharged from the lower portion of the moving layer were joined in a gas outlet chamber. The joined exhaust gas showed a denitration rate of 65% and a desulfurization rate of 100%, based on the original exhaust gas, while the amount of leakage of ammonia gas became 13 ppm.

As described above, the exhaust gas treatment processes of Examples 1 and 2 are superior to those of Comparative Examples 1 and 2 in the denitration rate and the amount of leakage of ammonia gas.

INDUSTRIAL APPLICABILITY

The present invention is applicable to exhaust gas treatment apparatus for treating exhaust gas which contains sulfur oxides ($SO_x$) and nitrogen oxides ($NO_x$), such as boiler exhaust gas, sintering furnace exhaust gas, waste incinerator exhaust gas, etc.

**Claims**

1. An exhaust gas treatment process in which exhaust gas is passed for treatment through a cross-flow moving layer (52) which accommodates a carbonaceous catalyst, and the carbonaceous catalyst which has become inactive in association with the treatment of exhaust gas is regenerated, comprising the steps of:

   (a) dividing an exhaust gas flow into a plurality of exhaust gas flows;
   (b) charging exhaust gas of a plurality of divided exhaust gas flows into a single moving layer (52);
   (c) introducing ammonia gas into exhaust gas of a pre-determined exhaust gas flow among the exhaust gas flows;
   (d) charging the exhaust gas, into which ammonia gas has been introduced, into a predetermined portion of said moving layer (52) which accommodates the carbonaceous catalyst and in which the exhaust gas is treated; and
   (e) adjusting the amount of the ammonia gas that is introduced into exhaust gas such that the mole ratio between $NH_4^+$ and $SO_4^{2-}$ adsorbed on the carbonaceous catalyst which is discharged from the bottom portion of said moving layer and charged into a regenerator (18) becomes 1 or less.

2. An exhaust gas treatment process according to Claim 1, wherein

   (a) said exhaust gas into which ammonia gas has been introduced is charged into the upper portion (58) of said moving layer (52); and
   (b) said exhaust gas into which ammonia gas is not introduced is charged into the lower portion (59) of said moving layer (52).

3. An exhaust gas treatment process according to Claim 1, wherein

   (a) said exhaust gas into which ammonia gas has been introduced is charged into the upper (158) and intermediate (159) portions of said moving layer (52); and
   (b) said exhaust gas into which ammonia gas is not introduced is charged into the lower portion (160) of said moving layer (52).

4. An exhaust gas treatment process according to Claim 3, wherein

   (a) the amount of ammonia gas to be introduced into the exhaust gas to be charged into the upper portion (158) of said moving layer (52) is made relatively small;
   (b) the amount of ammonia gas to be introduced into the exhaust gas to be charged into the intermediate portion (159) of said moving layer (52) is made relatively large.

5. An exhaust gas treatment process according to Claim 1, wherein

   (a) said exhaust gas into which ammonia gas has been introduced is charged into the intermediate portion (159) of said moving layer (52); and
   (b) said exhaust gas into which ammonia gas is not introduced is charged into the upper (158) and lower (160) portions of said moving layer (52).

6. An exhaust gas treatment process according to any one of Claims 1 - 6, wherein the carbonaceous catalyst which moves downward within said moving layer (52) is divided into a plurality of flows.

7. An exhaust gas treatment process according to Claim 1, wherein said plurality of exhaust gas flows are charged into the moving layer (52) via compartments (58, 59) which are partitioned and formed adjacent to the moving layer (52).

**Patentansprüche**

1. Verfahren zur Behandlung von Abgas, bei dem das Abgas zur Behandlung durch eine quer angeströmte, sich bewegende Schicht (52) geführt wird, welche einen kohlenstoffhaltigen Katalysator beherbergt, und bei dem der kohlenstoffhaltige Katalysator, welcher in Zusammenhang mit der Behandlung des Abgases inaktiv wurde, regeneriert wird, welches folgende Schritte umfasst:

(a) Teilen eines Abgasstroms in eine Mehrzahl von Abgasströmen;

(b) Zuführen des Abgases einer Mehrzahl von geteilten Abgasströmen in eine einzige, sich bewegende Schicht (52) ;

(c) Einspeisen von Ammoniakgas in das Abgas eines vorbestimmten Abgasstroms entlang der Abgasströme;

(d) Zuführen des Abgases, in welches das Ammoniakgas eingespeist wurde, in einen vorbestimmten Abschnitt der sich bewegenden Schicht (52), welche den kohlenstoffhaltigen Katalysator beherbergt und in welcher das Abgas behandelt wird; und

(e) Einstellen der Menge des Ammoniakgases, die in das Abgas eingeführt wird, so dass das Molverhältnis zwischen $NH_4^+$ und $SO_4^{2-}$, welche auf dem kohlenstoffhaltigen Katalysator adsorbiert sind, welcher von dem unteren Abschnitt der sich bewegenden Schicht entnommen und einem Regenerator (18) zugeführt wird, 1 oder weniger beträgt.

2. Verfahren zur Behandlung von Abgas nach Anspruch 1, wobei

(a) das Abgas, in welches Ammoniakgas eingespeist wurde, dem oberen Abschnitt (58) der sich bewegenden Schicht (52) zugeführt wird; und

(b) das Abgas, in welches kein Ammoniakgas eingespeist wurde, dem unteren Abschnitt (59) der sich bewegenden Schicht (52) zugeführt wird.

3. Verfahren zur Behandlung von Abgas nach Anspruch 1, wobei

(a) das Abgas, in welches Ammoniakgas eingespeist wurde, den oberen (158) und mittleren (159) Abschnitten der sich bewegenden Schicht (52) zugeführt wird; und

(b) das Abgas, in welches kein Ammoniakgas eingespeist wurde, dem unteren Abschnitt (160) der sich bewegenden Schicht (52) zugeführt wird.

4. Verfahren zur Behandlung von Abgas nach Anspruch 3, wobei

(a) die Menge des Ammoniakgases, welche in das Abgas eingespeist werden soll, das wiederum dem oberen Abschnitt (158) der sich bewegenden Schicht (52) zugeführt werden soll, verhältnismäßig klein gemacht wird;

(b) die Menge des Ammoniakgases, welche in das Abgas eingespeist werden soll, das wiederum dem mittleren Abschnitt (159) der sich bewegenden Schicht (52) zugeführt werden soll, verhältnismäßig groß gemacht wird.

5. Verfahren zur Behandlung von Abgas nach Anspruch 1, wobei

(a) das Abgas, in welches Ammoniakgas eingespeist wurde, dem mittleren Abschnitt (159) der sich bewegenden Schicht (52) zugeführt wird; und

(b) das Abgas, in welches kein Ammoniakgas eingespeist wurde, den oberen (158) und unteren (160) Abschnitten der sich bewegenden Schicht (52) zugeführt wird.

6. Verfahren zur Behandlung von Abgas nach einem der Ansprüche 1 bis 6, wobei der kohlenstoffhaltige Katalysator, der sich innerhalb der sich bewegenden Schicht (52) nach unten bewegt, in eine Mehrzahl von Strömen geteilt wird.

7. Verfahren zur Behandlung von Abgas nach Anspruch 1, wobei eine Mehrzahl von Abgasströmen der sich bewegenden Schicht (52) über die abgeteilten Räume (58, 59), welche in Nachbarschaft zu der sich bewegenden Schicht (52) abgeteilt und ausgebildet werden, zugeführt werden.

## Revendications

1. Processus de traitement de gaz d'échappement dans lequel le gaz d'échappement est passé pour traitement à travers une couche en déplacement à flux croisés (52) qui héberge un catalyseur carboné, et le catalyseur carboné qui est devenu inactif en association avec le traitement de gaz d'échappement est régénéré, comprenant les étapes consistant à :

(a) diviser un flux de gaz d'échappement en une pluralité de flux de gaz d'échappement ;

(b) charger le gaz d'échappement d'une pluralité de flux de gaz d'échappement divisés en une seule couche en déplacement (52) ;

(c) introduire du gaz d'ammoniaque dans le gaz d'échappement d'un flux de gaz d'échappement prédéterminé parmi les flux de gaz d'échappement ;

(d) charger le gaz d'échappement, dans lequel du gaz d'ammoniaque a été introduit, dans une portion prédéterminée de ladite couche en déplacement (52) qui héberge le catalyseur carboné et dans laquelle le gaz d'échappement est traité ; et

(e) ajuster la quantité de gaz d'ammoniaque qui est introduit dans le gaz d'échappement de manière à ce que le rapport molaire entre $NH_4^+$ et $SO_4^{2-}$ absorbé sur le catalyseur carboné qui est déchargé de la portion inférieure de ladite couche en déplacement et chargé dans un régénérateur (18) devient inférieur ou égal à 1.

2. Processus de traitement de gaz d'échappement selon la revendication 1, dans lequel

(a) ledit gaz d'échappement dans lequel du gaz d'ammoniaque est introduit est chargé dans la portion supérieure (58) de ladite couche en déplacement (52) ; et

(b) ledit gaz d'échappement dans lequel du gaz d'ammoniaque n'est pas introduit est chargé dans la portion inférieure (59) de ladite couche en déplacement (52).

3. Processus de traitement de gaz d'échappement selon la revendication 1, dans lequel

(a) ledit gaz d'échappement dans lequel du gaz d'ammoniaque est introduit est chargé dans la portion supérieure (158) et la portion intermédiaire (159) de ladite couche en déplacement (52) ; et

(b) ledit gaz d'échappement dans lequel du gaz d'ammoniaque n'est pas introduit est chargé dans la portion inférieure (160) de ladite couche en déplacement (52).

4. Processus de traitement de gaz d'échappement selon la revendication 3, dans lequel

(a) la quantité de gaz d'ammoniaque à introduire dans le gaz d'échappement à charger dans la portion supérieure (158) de ladite couche en déplacement (52) est rendue relativement petite ;

(b) la quantité de gaz d'ammoniaque à introduire dans le gaz d'échappement à charger dans la portion intermédiaire (159) de ladite couche en déplacement (52) est rendue relativement grande.

5. Processus de traitement de gaz d'échappement selon la revendication 1, dans lequel

(a) ledit gaz d'échappement dans lequel du gaz d'ammoniaque est introduit est chargé dans la portion intermédiaire (159) de ladite couche en déplacement (52) ; et

(b) ledit gaz d'échappement dans lequel du gaz d'ammoniaque n'est pas introduit est chargé dans la portion supérieure (158) et dans la portion inférieure (160) de ladite couche en déplacement (52).

6. Processus de traitement de gaz d'échappement selon l'une quelconque des revendications 1 à 5, dans lequel le catalyseur carboné qui se déplace vers le bas à l'intérieur de ladite couche en déplacement (52) est divisé en une pluralité de flux.

7. Processus de traitement de gaz d'échappement selon la revendication 1, dans lequel ladite pluralité de flux de gaz d'échappement sont chargés dans la couche en déplacement (52) par l'intermédiaire des compartiments (58, 59) qui sont partitionnés et formés de manière adjacente à la couche en déplacement (52).

# FIG. I

52:MOVING LAYER

51:GAS INLET CHAMBER

53:GAS OUTLET CHAMBER

11:MOVING-LAYER REACTOR

NH₃

EXHAUST GAS

15

24

L4

L2

58

57

59

55

56

20

25

17

L5

18

L7

L1

L3

L6

# FIG.2

# FIG.3

# FIG.4

# FIG.5

CARBONACEOUS
CATALYST

AMOUNT OF LEAKAGE

20  40  60  80 (ppm)

S1

LN3

EXHAUST
GAS

NH₃

LN2

LN1

0                     50                    100 (%)

REMOVAL RATE

# FIG.6